# EUROPEAN PATENT APPLICATION

(11) **EP 4 560 778 A1**
(43) Date of publication of application: **28.05.2025**
(21) Application number: 24184003.2
(22) Date of filing: 24.06.2024
(51) Int. Cl.: H01M 10/44, H01M 10/54

(54) **BATTERY DISPOSAL CONTAINER AND BATTERY DISPOSAL DEVICE**

(30) Priority: 22.11.2023 KR 20230163562
(71) Applicant: Samsung SDI Co., Ltd., Yongin-si, Gyeonggi-do 17084 (KR)
(72) Inventor: Kim, Bo Hoon, 16678 Suwon-si, Gyeonggi-do (KR)
(74) Representative: Gulde & Partner

(57) **Abstract**

The present invention relates to a battery disposal container (200) and a battery disposal device, and the battery disposal container (200) includes a housing (210) in which a battery (10) is accommodated and a first opening (210a) through which a fluid flows is provided, and an insulating member (220) which is installed in the housing (210) and faces an inner surface of the housing (210) and in which a second opening (220a) communicating with the first opening (210a) is provided.

## Description

### BACKGROUND

### 1. Field of the Invention

The present invention relates to a battery disposal container and a battery disposal device.

### 2. Description of the Related Art

In general, with rapidly increasing demand for portable electronics, such as laptops, video cameras, and mobile phones, and commercialization of robots and electric vehicles, research is actively carried out to develop high-performance secondary batteries enabling repeated charging/discharging.

Secondary batteries are widely used in small devices, such as portable electronics, as well as medium and large devices, such as electric vehicles and energy storage systems (ESS), for power generation and energy storage. In particular, in medium or large devices, multiple battery cells are electrically connected to each other to form a battery module in order to enhance output and/or capacity of the batteries.

The above information disclosed in this Background section is provided for enhancement of understanding of the background of the present disclosure, and, therefore, it may contain information that does not constitute related (or prior) art.

### SUMMARY OF THE INVENTION

The present invention is directed to providing a battery disposal container and a battery disposal device capable of discharging a battery by treating the battery with salt water.

These and other aspects and features of the present disclosure will be described in or will be apparent from the following description of some embodiments of the present disclosure.

According to an aspect of the present invention, there is provided a battery disposal container including a housing in which a battery is accommodated and a first opening through which a fluid flows is provided and an insulating member which is installed in the housing and faces an inner surface of the housing and in which a second opening communicating with the first opening is provided.

The second opening may be disposed at a position corresponding to the first opening.

The housing may include an enclosure in which the battery is accommodated and of which a first surface is open and a cover that is coupled to the enclosure and covers the first surface.

The cover may be rotatably coupled to the enclosure through a hinge part.

The first opening may be provided in the enclosure.

The enclosure may include a plurality of second surfaces in which the first opening is provided and a third surface in which the first opening is not provided.

A latching member may be provided on the cover, and a ring member fixedly latched on the latching member may be provided on the enclosure.

A handle may be provided on the cover.

The insulating member may be coupled to the enclosure.

The insulating member may include a Bakelite material.

According to another aspect of the present invention, there is provided a battery disposal device including a salt water tank in which salt water is stored and the battery disposal container which is put into the salt water tank and immersed in the salt water.

The battery disposal device may further include a jig which is installed inside the housing and on which the battery is mounted.

The jig may include a base part on which the battery is seated, a terminal part provided on the base part and in contact with an electrode of the battery, and a moving part that is movably coupled to the base part and presses the battery such that the electrode is electrically connected to the terminal part.

The battery disposal device may include a voltage measuring unit that measures a voltage of the battery.

The voltage measuring unit may include a voltage measuring main part mounted on the housing and provided with a voltage sensor that measures a voltage of the battery and a first display on which a voltage value of the battery which is measured by the voltage sensor is displayed, and a first cable part that electrically connects the voltage measuring main part and the terminal part.

The voltage measuring main part may be further provided with a first alarm unit that outputs an alarm when the voltage of the battery is smaller than or equal to a set value and a first storage unit that stores the voltage value of the battery.

The battery disposal device may further include a temperature measuring unit that measures a temperature of the battery.

The voltage measuring unit may be waterproofed with a waterproof member.

The temperature measuring unit may include a second cable part provided with a temperature sensor attached to the battery and a temperature measuring main part mounted on the housing and provided with a second display which is connected to the second cable part and on which the temperature of the battery which is measured by the temperature sensor is displayed.

The temperature measuring main part may be further provided with a second alarm unit that outputs an alarm when the temperature of the battery is greater than or equal to a set value and a second storage unit that stores a temperature value of the battery.

According to an embodiment of the present invention, when a battery is treated with salt water, the salt water can be smoothly introduced into a battery disposal container, and a user can be protected from explosion of the battery.

However, the effects obtainable through the present disclosure are not limited to the above effects, and other technical effects that are not mentioned will be clearly understood by those skilled in the art from the following description of the present disclosure.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic side cross-sectional view illustrating a state in which a battery disposal container is put into a salt water tank in a battery disposal device according to an embodiment of the present invention.
FIG. 2 is a perspective view of the battery disposal container according to the embodiment of the present invention from the above.
FIG. 3 is a perspective view of the battery disposal container according to the embodiment of the present invention from the bottom.
FIG. 4 is a perspective view of an inside of the battery disposal container according to the embodiment of the present invention in one direction.
FIG. 5 is a perspective view of the inside of the battery disposal container according to the embodiment of the present invention in the other direction.
FIG. 6 is a schematic side cross-sectional view illustrating a first example of a jig in the battery disposal device according to the embodiment of the present invention.
FIG. 7 is a schematic side cross-sectional view illustrating a second example of a jig in the battery disposal device according to the embodiment of the present invention.
FIG. 8 is a front view illustrating a state in which a voltage measuring unit and a temperature measuring unit are mounted on the battery disposal container in the battery disposal device according to the embodiment of the present invention.
FIG. 9 is a schematic block diagram illustrating a connection relationship between a battery and components of the voltage measuring unit in the battery disposal device according to the embodiment of the present invention.
FIG. 10 is a schematic block diagram illustrating a connection relationship between the battery and components of the temperature measuring unit in the battery disposal device according to the embodiment of the present invention.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

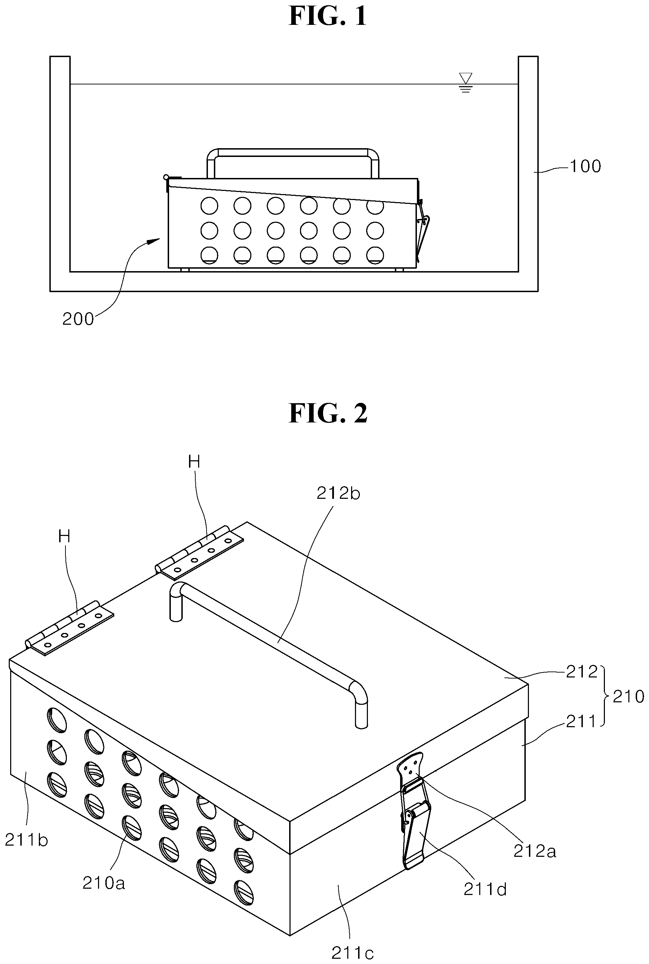

FIG. 1 is a schematic side cross-sectional view illustrating a state in which a battery disposal container is put into a salt water tank in a battery disposal device according to an embodiment of the present invention.

Referring to FIG. 1, a battery disposal device according to the embodiment of the present invention may include a salt water tank 100 and a battery disposal container 200.

The salt water tank 100 stores salt water. The salt water tank 100 may be formed in a hollow shape having an internal space. A cross section of the salt water tank 100 may be formed in a circular shape, an elliptic shape, or a polygonal shape having angled corners.

The salt water tank 100 may be provided with an opening through which the battery disposal container 200 may be put into and taken out. The salt water having set salinity may be stored inside the salt water tank 100.

The battery disposal container 200 is put into the salt water tank 100 and immersed in the salt water. The battery disposal container 200 may be put into the salt water tank 100 through the opening of the salt water tank 100 and immersed in salt water for a set time.

A battery 10 accommodated in the battery disposal container 200 may be discharged through salt water treatment to decrease a residual voltage of the battery 10, thereby preventing explosion due to a short circuit during battery disassembly work for disposing the battery 10.

The battery 10 accommodated in the battery disposal container 200 may be exemplified as a prismatic, circular, or coin primary battery or a prismatic, circular, or coin secondary battery capable of charging and discharging a preset amount of power. Further, the battery 10, which is a waste battery, may include a battery cell, a jelly roll, an electrode plate, and the like.

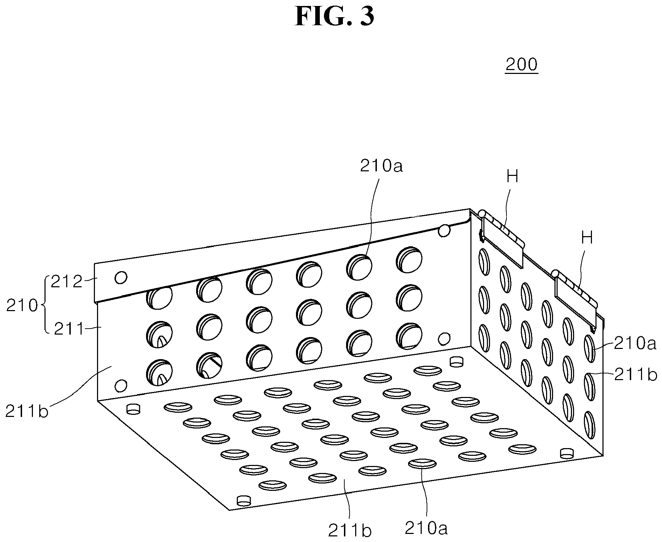

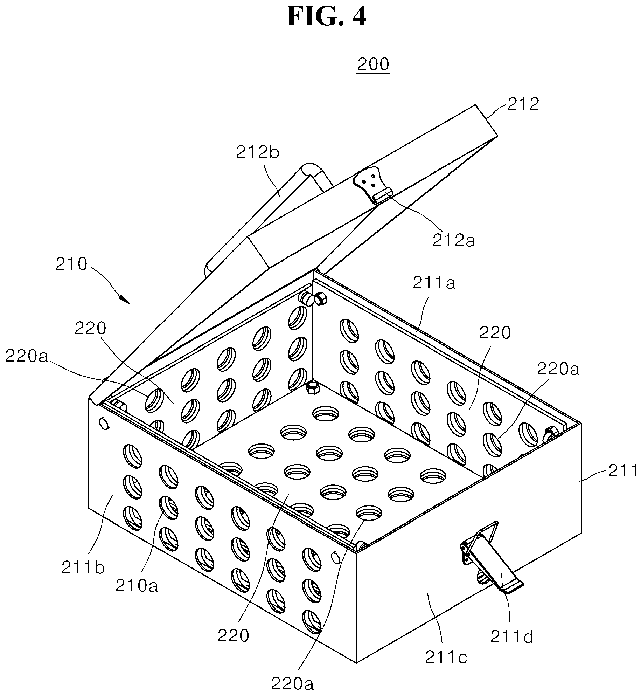

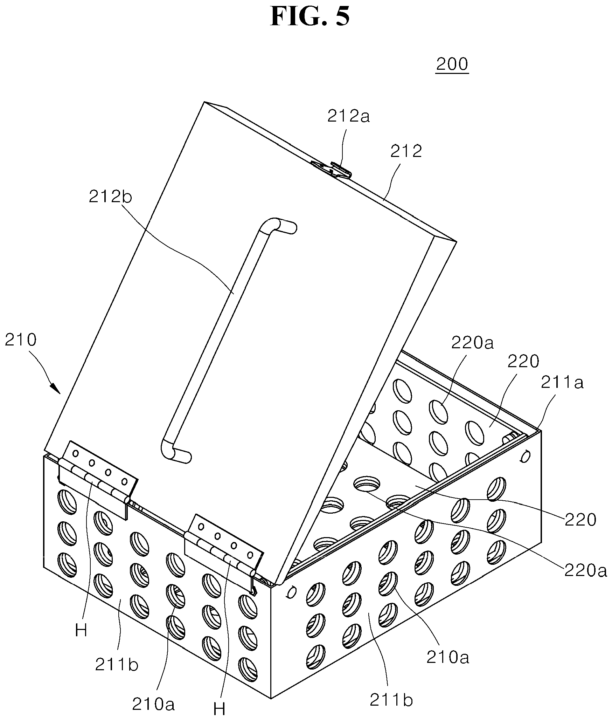

FIG. 2 is a perspective view of the battery disposal container according to the embodiment of the present invention from the above, FIG. 3 is a perspective view of the battery disposal container according to the embodiment of the present invention from the bottom, FIG. 4 is a perspective view of an inside of the battery disposal container according to the embodiment of the present invention in one direction, and FIG. 5 is a perspective view of the inside of the battery disposal container according to the embodiment of the present invention in the other direction.

Referring to FIGS. 2 to 7, the battery disposal container 200 according to the embodiment of the present invention includes a housing 210 and an insulating member 220.

The housing 210 accommodates the battery 10. The housing 210 is provided with a first opening 210a through which a fluid flows. Here, the fluid may include the salt water stored in the salt water tank 100.

The housing 210 may be made of stainless steel or the like to prevent the battery 10 accommodated therein from being deformed by an explosion or corroded by the salt water during the salt water treatment process. The housing 210 may include an enclosure 211 and a cover 212.

The enclosure 211 may be formed in a hollow shape having an internal space to accommodate the battery 10. The enclosure 211 may be formed in a polygonal shape having angled corners. The enclosure 211 may be formed in a shape in which a first surface 211a is open. The battery 10 may be put into or taken out through the first surface 211a of the enclosure 211. Here, the first surface 211a may referred to as an upper surface of the enclosure 211.

The enclosure 211 may be provided with the first opening 210a. The first opening 210a may be formed to pass through the enclosure 211 in a thickness direction of the enclosure 211. The salt water may be introduced into the enclosure 211 or discharged to the outside of the enclosure 211 through the first opening 210a.

The enclosure 211 may include a plurality of second surfaces 211b and a third surface 211c. The plurality of second surfaces 211b may be referred to as both side surfaces, a rear surface, and a lower surface of the enclosure 211, and the third surface 211c may be referred to as a front surface of the enclosure 211 facing a user.

A first opening 210a may be provided in the second surface 211b of the enclosure 211. A plurality of first openings 210a may be arranged to be spaced apart from each other in the second surface 211b. The first opening 210a may not be provided in the third surface 211c. The third surface 211c of the enclosure 211 may form a shielding surface, thereby preventing flames or fragments caused by explosion of the battery 10 from being directed to the user during the salt water treatment process for the battery 10.

The cover 212 may be coupled to the enclosure 211 and cover the first surface 211a of the enclosure 211. The cover 212 may be rotatably coupled to the enclosure 211 to open or close the first surface 211a of the enclosure 211. One edge of the cover 212 facing the rear surface of the enclosure 211 may be hinge-coupled to a rear edge of the enclosure 211 through a hinge portion H.

The cover 212 may not be provided with the first opening 210a provided in the enclosure 211. Since the cover 212 forms the shielding surface, flames or fragments caused by the explosion of the battery 10 may be prevented from being discharged to the outside of the enclosure 211 through the first surface 211a of the enclosure 211 during the salt water treatment process for the battery 10.

The battery disposal container 200 according to the embodiment of the present invention may further include a latching member 212a and a ring member 211d. The latching member 212a may be provided on the cover 212, and the ring member 211d fixedly latched on the latching member 212a may be provided on the enclosure 211. The latching member 212a and the ring member 211d may be exemplified as cicada rings.

The latching member 212a may protrude from an outer surface of the cover 212 toward the front surface of the enclosure 211. The ring member 211d may be rotatably coupled to the front surface of the enclosure 211. The ring member 211d may be fixedly latched on the latching member 212a, and thus the cover 212 that shields the first surface 211a of the enclosure 211 may be firmly fixed to the enclosure 211.

The battery disposal container 200 according to the embodiment of the present invention may further include a handle 212b. The handle 212b, which is a member gripped by the user, may be provided integrally with the cover 212. The handle 212b may protrude from an outer upper surface of the cover 212.

The handle 212b may be formed in an approximately "⊂" shape. The cover 212 is provided with the handle 212b, and thus the battery disposal container 200 according to the present invention may be easily transported and put into the salt water tank 100.

The insulating member 220 is installed in the housing 210. The insulating member 220 may be disposed to face an inner surface of the housing 210. In detail, the insulating member 220 may be installed inside the enclosure 211. The insulating member 220 may be arranged to face the plurality of second surfaces 211b and the third surface 211c of the enclosure 211, and may be coupled to the enclosure 211 through bolting. The insulating member 220 may be arranged to be spaced apart from the plurality of second surfaces 211b and the third surface 211c.

The insulating member 220 may be formed approximately in a plate shape. The insulating member 220 can prevent a short circuit that may occur when the battery 10 treated with the salt water comes into contact with the enclosure 211. The insulating member 220 may be manufactured of a Bakelite material and the like.

The insulating member 220 may be provided with a second opening 220a. The second opening 220a may be formed to pass through the insulating member 220 in a thickness direction of the insulating member 220. A plurality of second openings 220a may be arranged to be spaced apart from each other in the insulating member 220.

The second opening 220a formed in the insulating member 220 may be disposed at a position corresponding to the first opening 210a formed in the enclosure 211. The first opening 210a and the second opening 220a may be formed to have the same diameter. The first opening 210a and the second opening 220a may communicate with each other. Thus, the salt water may sequentially pass through the first opening 210a and the second opening 220a and may be introduced into the housing, especially the enclosure 211 of the housing (200). If the battery disposal container is placed in the battery disposal device, the salt water of the salt water tank 100 may sequentially pass through the first opening 210a and the second opening 220a.

The salt water stored in the salt water tank 100 may be quickly introduced into the enclosure 211 while forming a turbulent flow, through the second opening 220a formed in the insulating member 220. Thus, while the battery disposal container 200 according to the present disclosure sinks to the bottom of the salt water tank 100, the battery disposal container 200 may stably sink without rotating or turning over.

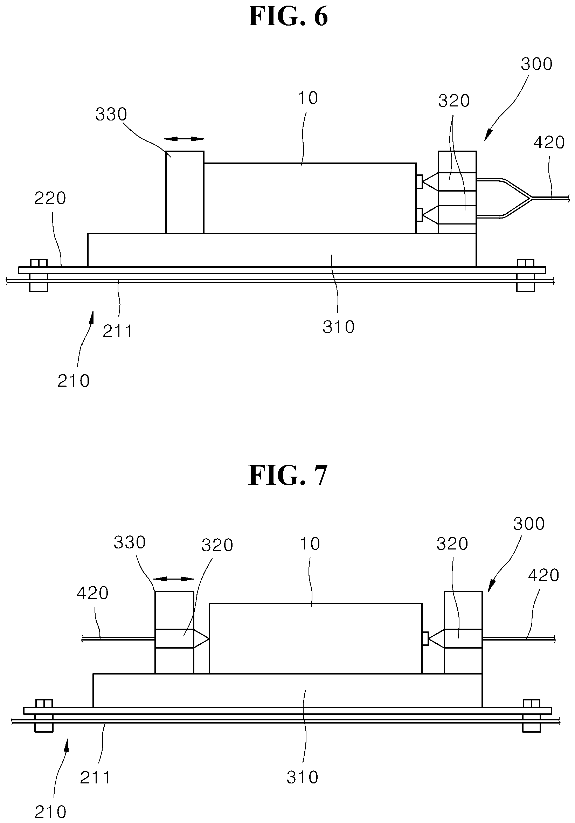

FIG. 6 is a schematic side cross-sectional view illustrating a first example of a jig in the battery disposal device according to the embodiment of the present invention.

Referring to FIG. 6, the battery disposal device according to the embodiment of the present invention may further include a jig 300.

The jig 300 may be installed inside the housing 210. The jig 300 may serve to fix the battery 10 to the housing 210. The battery 10 may be mounted on the jig 300. The jig 300 may include a base part 310, a terminal part 320, and a moving part 330.

The base part 310 may be installed on an inner bottom of the enclosure 211. The base part 310 may be seated on the insulating member 220 coupled to the inner bottom of the enclosure 211 and fixed to the insulating member 220. The base part 310 may be coupled to the insulating member 220 through bolting. The battery 10 may be seated on the base part 310.

The battery 10 may include a prismatic primary battery in which a pair of electrodes having different polarities are both provided on one side surface or a prismatic secondary battery capable of charging and discharging a preset amount of power.

The terminal part 320 may be provided on one side of the base part 310. A pair of terminal parts 320 may be provided in contact with a pair of electrodes of the battery 10, which have different polarities.

The moving part 330 may be movably coupled to the base part 310. The moving part 330 may be positioned on the other side of the base part 310 and may slidably move in a longitudinal direction of the base part 310. The moving part 330 may perform in a sliding linear reciprocating movement in the base part 310 by operating an actuator (not illustrated).

The moving part 330 may press the other side of the battery 10 in a direction in which the terminal part 320 is positioned, and thus an electrode of the battery 10 spaced apart from the terminal part 320 may be electrically connected to the terminal part 320. Further, the moving part 330 may press the battery 10, fix the battery 10 between the terminal part 320 and the moving part 330, and thus prevent the battery 10 from being separated from the battery part 310.

FIG. 7 is a schematic side cross-sectional view illustrating a second example of a jig in the battery disposal device according to the embodiment of the present invention.

Referring to FIG. 7, the battery disposal device according to the embodiment of the present invention may further include the jig 300.

The jig 300 may be installed inside the housing 210. The jig 300 may serve to fix the battery 10 to the housing 210. The battery 10 may be mounted on the jig 300. The jig 300 may include the base part 310, the terminal part 320, and the moving part 330.

The base part 310 may be installed on the inner bottom of the enclosure 211. The base part 310 may be seated on the insulating member 220 coupled to the inner bottom of the enclosure 211 and fixed to the insulating member 220. The base part 310 may be coupled to the insulating member 220 through bolting. The battery 10 may be seated on the base part 310.

The battery 10 may include a circular or coin primary battery in which the pair of electrodes having different polarities are provided on one side surface and the other side surface or a circular or coin secondary battery capable of charging and discharging a preset amount of power.

The terminal part 320 may be provided on one side of the base part 310 and on the moving part 330, which will be described below, positioned on the other side of the base part 310. The pair of terminal parts 320 may be provided in contact with the pair of electrodes of the battery 10, which have different polarities.

The moving part 330 may be movably coupled to the base part 310. The moving part 330 may slidably move in the longitudinal direction of the base part 310. The moving part 330 may perform in the sliding linear reciprocating movement in the base part 310 by operating an actuator (not illustrated).

The moving part 330 may press the other side of the battery 10 toward the terminal part 320 positioned on one side of the base part 310, and thus an electrode provided on one surface of the battery 10 spaced apart from the terminal part 320 may be electrically connected to the terminal part 320. Further, the moving part 330 may press the battery 10, fix the battery 10 between the terminal part 320 and the moving part 330 positioned on one side of the base part 310, and thus prevent the battery 10 from being separated from the base part 310.

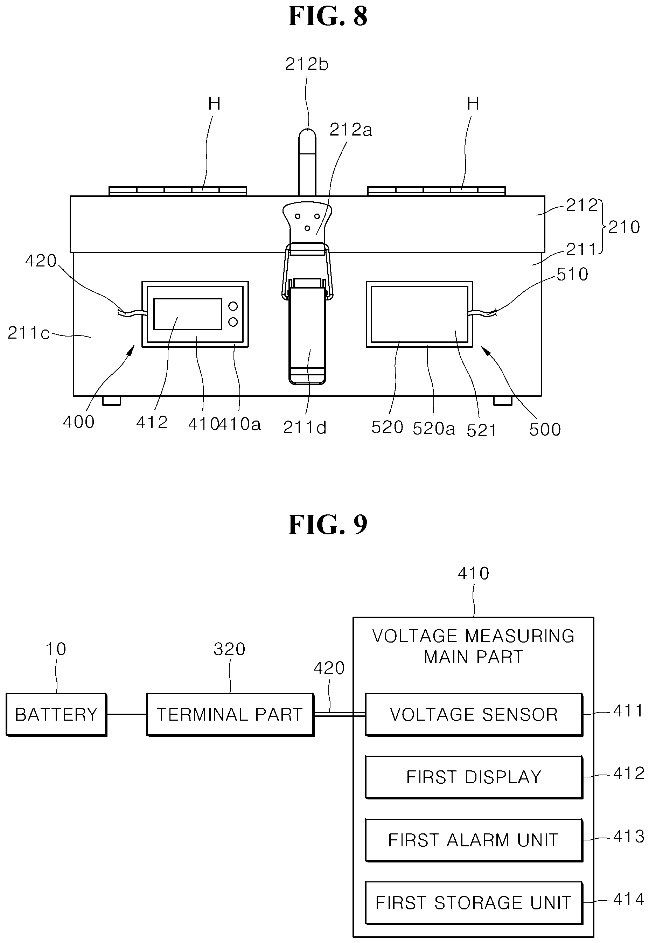

FIG. 8 is a front view illustrating a state in which a voltage measuring unit and a temperature measuring unit are mounted on the battery disposal container in the battery disposal device according to the embodiment of the present invention, and FIG. 9 is a schematic block diagram illustrating a connection relationship between a battery and components of the voltage measuring unit in the battery disposal device according to the embodiment of the present invention.

Referring to FIGS. 6 to 9, the battery disposal device according to the embodiment of the present invention may further include a voltage measuring unit 400 that measures a voltage of the battery 10. The voltage measuring unit 400 may include a voltage measuring main part 410 and a first cable part 420.

The voltage measuring main part 410 may be mounted on an outer surface of the housing 210. In addition, the voltage measuring main part 410 may be coupled to the third surface 211c of the enclosure 211. The voltage measuring main part 410 may be waterproofed with a waterproof member 410a to prevent damage caused by the salt water. The waterproof member 410a may be exemplified as a waterproof pack that surrounds the voltage measuring main part 410.

The voltage measuring main part 410 may include a voltage sensor 411, a first display 412, a first alarm unit 413, and a first storage unit 414.

The voltage sensor 411 may be electrically connected to the first cable part 420, which will be described below, to measure a voltage of the battery 10 transmitted through the first cable part 420.

The first display 412 may display a voltage value of the battery 10 measured by the voltage sensor 411. The first display 412 may include a digital liquid crystal display (LED). The voltage value of the battery 10, which is displayed on the first display 412, may be displayed on the first display 412 in real time in the form of a number, a graph, or a shape.

The first alarm unit 413 may output an alarm when the voltage of the battery 10 is smaller than or equal to a set value. For example, when the voltage of the battery 10 is lowered to suit the purpose of salt water treatment, the first alarm unit 413 may output an alarm as sound or light to inform the user that the salt water treatment for the battery 10 has been completed. Thus, a salt water treatment time for the battery 10 can be shortened.

The first storage unit 414 may store the voltage value of the battery 10. The voltage value according to a time of the battery 10 treated with the salt water is stored in the first storage unit 414, so that a discharge rate of the battery 10 according to a concentration of the salt water can be analyzed, and an optimal salt water concentration can be derived.

The first cable part 420 may electrically connect the voltage measuring main part 410 and the terminal part 320. One end of the first cable part 420 may be connected to the voltage measuring main part 410 and connected to the voltage sensor 411, and the other end of the first cable part 420 may be connected to the pair of terminal parts 320.

The first cable part 420 may be treated with a waterproof material to prevent damage caused by the salt water. The waterproof member may be exemplified as a waterproofing agent that coats the first cable part 420.

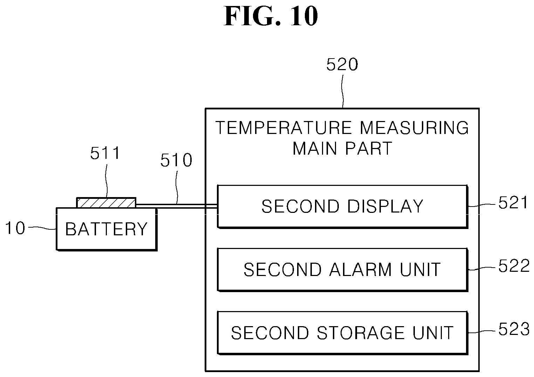

FIG. 10 is a schematic block diagram illustrating a connection relationship between the battery and components of the temperature measuring unit in the battery disposal device according to the embodiment of the present invention.

Referring to FIGS. 6 to 8 and 10, the battery disposal device according to the embodiment of the present invention may further include a temperature measuring unit 500 that measures a temperature of a battery. The temperature measuring unit 500 may include a second cable part 510 and a temperature measuring main part 520.

The second cable part 510 may be provided with a temperature sensor 511 that is attached to the battery 10 and measures the temperature of the battery 10. The temperature sensor 511 may include a thermocouple. The temperature sensor 511 may be connected to one end of the second cable part 510, and the other end of the second cable part 510 may be connected to the temperature measuring main part 520, which will be described below.

The second cable part 510 may be treated with a waterproof material to prevent damage caused by the salt water. The waterproof member may be exemplified as a waterproofing agent that coats the second cable part 510.

The temperature measuring main part 520 may be mounted on the outer surface of the housing 210. In addition, the temperature measuring main part 520 may be coupled to the third surface 211c of the enclosure 211. The temperature measuring main part 520 may be waterproofed with a waterproof member 520a to prevent damage caused by the salt water. The waterproof member 520a may be exemplified as a waterproof pack that surrounds the temperature measuring main part 520.

The temperature measuring main part 520 may include a second display 521, a second alarm unit 522, and a second storage unit 523.

The second display 521 may be connected to the second cable part 510 and may display the temperature of the battery 10, which is measured by the temperature sensor 511. The second display 521 may include a digital LED. The voltage value of the battery 10, which is displayed on the second display 521, may be displayed on the second display 521 in real time in the form of a number, a graph, or a shape.

The second alarm unit 522 may output an alarm when the voltage of the battery 10 is greater than or equal to a set value. When the battery 10 is discharged due to the salt water treatment, the temperature of the battery 10 increases, and thus the battery may explode. Thus, when the temperature increases to a temperature in which the battery 10 starts self-heating due to thermal decomposition, the second alarm unit 522 may output an alarm as sound or light to warm a person near the salt water tank 100 so that the person can evacuate.

The second storage unit 523 may store the voltage value of the battery 10. The temperature value according to a time of the battery 10 treated with the salt water is stored in the second storage unit 523, and thus an increase in the temperature of the battery 10 according to a concentration of the salt water can be analyzed, and the optimal salt water concentration can be derived.

According to an embodiment of the present invention, when a battery is treated with salt water, the salt water can be smoothly introduced into a battery disposal container, and a user can be protected from explosion of the battery.

Although the present invention has been described with reference to embodiments and drawings illustrating aspects thereof, the present invention is not limited thereto. Various modifications and variations can be made by a person skilled in the art to which the present invention belongs within the scope of the present invention and the claims and equivalents thereto.

## Claims

1. A battery disposal container (200) comprising:
a housing (210) accommodating a battery (10) and including a first opening (210a) through which a fluid flows is provided; and
an insulating member (220) arranged in the housing (210) and faceing an inner surface of the housing (210) and having a second opening (220a) communicating with the first opening (210a) is provided.

2. The battery disposal container (200) of claim 1, wherein the second opening (220a) is disposed at a position corresponding to the first opening (210a).

3. The battery disposal container (200) of claim 1 or 2, wherein the housing (210) includes:
an enclosure (211) accommodating the battery (10) and of which a first surface (211a) is open; and
a cover (212) coupled to the enclosure (211) and configured to cover (212) the first surface (211a).

4. The battery disposal container (200) of claim 3, wherein the first opening (210a) is provided in the enclosure (211).

5. The battery disposal container (200) of claim 3 or 4, wherein the enclosure (211) includes:
a plurality of second surfaces (211b) in which the first opening (210a) is provided; and
a third surface (211c) in which the first opening (210a) is not provided.

6. The battery disposal container (200) of any of claims 3 to 5, further comprising:
a latching member (212a) on the cover (212), and
a ring member (211d) fixedly latched on the latching member (212a) and provided on the enclosure (211).

7. A battery disposal device comprising:
a salt water tank (100) in which salt water is stored; and
the battery disposal container (200) of any of claim 1 to 6, which is configured to be placed into the salt water tank (100) and immersed in the salt water.

8. The battery disposal device of claim 7, further comprising a jig (300) arranged inside the housing (210) and on which the battery (10) is to be mounted.

9. The battery disposal device of claim 7 or 8, wherein the jig (300) includes:
a base part (310) on which the battery is to be seated;
a terminal part (320) provided on the base part (310) and to be in contact with an electrode of the battery (10); and
a moving part (330) movably coupled to the base part (310) and configured to press the battery such that the electrode is electrically connected to the terminal part (320).

10. The battery disposal device of any of claims 7 to 9, further comprising a voltage measuring unit (400) configured to measure a voltage of the battery (10).

11. The battery disposal device of claim 10, wherein the voltage measuring unit (400) includes:
a voltage measuring main part (410) mounted on the housing (210) and inclduinga voltage sensor (411) configured to measure a voltage of the battery and a first display (412) on which a voltage value of the battery measured by the voltage sensor (411) is to be displayed; and
a first cable part (420) electrically connecting the voltage measuring main part (410) and the terminal part (320).

12. The battery disposal device of claim 11, wherein the voltage measuring main part (410) further comprises a first alarm unit (413) configured to output an alarm when the voltage of the battery is smaller than or equal to a set value and a first storage unit (414) configured to store the voltage value of the battery (10).

13. The battery disposal device of any of claims 7 to 12, further comprising a temperature measuring unit (500) configured to measure a temperature of the battery (10).

14. The battery disposal device of claim 13, wherein the temperature measuring unit (500) includes:
a second cable part (510) including a temperature sensor (511) attached to the battery (10); and
a temperature measuring main part (520) mounted on the housing (210) and inclduinga second display (521) which is connected to the second cable part (510) and on which the temperature of the battery measured by the temperature sensor (511) is to be displayed.

15. The battery disposal device of claim 14, wherein the temperature measuring main part (520) further comprises:
a second alarm unit (522) configured to output an alarm when the temperature of the battery is greater than or equal to a set value and
a second storage unit (523) configured to store a temperature value of the battery (10).
